# EUROPEAN PATENT APPLICATION

(11) **EP 3 855 378 A1**
(43) Date of publication of application: **28.07.2021**
(21) Application number: 19890002.9
(22) Date of filing: 02.08.2019
(51) Int. Cl.: G06Q 20/12

(54) **COMMODITY DETECTION METHOD AND DEVICE**

(30) Priority: 27.11.2018 CN 201811420721
(71) Applicant: Beijing Jingdong Qianshi Technology Co., Ltd., Beijing 100176 (CN)
(72) Inventor: LIN, Jinbiao, Beijing 100086 (CN)
(74) Representative: Prüfer & Partner mbB Patentanwälte · Rechtsanwälte
(86) International application number: PCT/CN2019/099052
(87) International publication number: WO 2020/107928

(57) **Abstract**

Disclosed are a commodity detection method and device. The method comprises: determining commodities taken by a user and weight data of each commodity (310); obtaining weight data within a weight increase time interval that starts when the user takes the commodities and ends when a gravity balance becomes stable (320), the weight balance being used for detecting weight of a commodity; determining maximum put-back weight data according to a difference between maximum weight data and minimum weight data in the weight data within the weight increase time interval (330); and predicting, according to the maximum put-back weight data and the weight data of each commodity, whether each commodity is put back (340). According to the method and device, accuracy of predicting whether a commodity is put back can be improved, and then accuracy of calculating commodities purchased by a user is improved.

## Description

### CROSS-REFERENCE TO RELATED APPLICATIONS

This application is based on and claims the priority to the Chinese Patent Application No. 201811420721.2, filed on November, 27, 2018, the disclosure of which is incorporated herein as a whole into the present application.

### TECHNICAL FIELD

This disclosure relates to the field of data processing, and in particular, to a commodity detection method and apparatus.

### BACKGROUND

At present, vending machines widely used in the market, although having some breakthroughs in payment means, have inevitable defects. For example, after a customer has purchased commodities, the vending machine still needs to transfer the commodities out of itself by means of a mechanical mechanism, and the mechanical mechanism is prone to malfunction, which results in adverse effects on the whole vending machine system. In addition, the customer using the existing vending machine, before purchasing the commodities, can only see samples or pictures of the commodities through an observation window, cannot select the commodities visually, and once taking them, cannot change the selection, which results in poor shopping experience of the customer.

Now, in the market have arisen a number of new unmanned vending counters, which enables customers to select commodities by themselves as if they were in a supermarket after they open counter doors, and the unmanned vending counters calculate the commodities purchased by the customers through technical means such as RFID (Radio Frequency Identification) tags, gravity calculation, image recognition, and can make intelligent settlement after the customers close the doors. Undoubtedly, such a shopping manner with better user experience, smaller floor space and more sense of science and technology, will be the mainstream of the retail industry in the future.

### SUMMARY

According to an aspect of the present disclosure, there is provided a commodity detection method, comprising: determining commodities taken by a user and weight data of each commodity of the commodities; acquiring weight data within a weight rise time interval from the time when user has taken the commodities to the time when a gravity balance is stabilized, wherein the gravity balance is used for detecting commodity weight; determining maximum return weight data according to a difference between maximum weight data and minimum weight data among the weight data within the weight rise time interval; and estimating whether each commodity has been returned according to the maximum return weight data and the weight data of each commodity.

In some embodiments, if the weight data of a certain commodity is greater than the maximum return weight data, it is estimated that the commodity has been not returned; and if the weight data of a certain commodity is less than or equal to the maximum return weight data, it is estimated that the commodity has been returned.

In some embodiments, if the weight data of a certain commodity is less than or equal to the maximum return weight data, and a difference between the weight data detected by the gravity balance after the user has taken the commodity and the weight data detected by the gravity balance after it is stabilized is not equal to the weight data of the commodity, it is estimated that the commodity has been returned, and another commodity has been taken by the user.

In some embodiments, the maximum weight data is greater than weight data of a previous moment and greater than weight data of a subsequent moment, and the minimum weight data is less than the weight data of the previous moment and less than the weight data of the subsequent moment.

In some embodiments, if there are a plurality of weight rise time intervals, a difference between the maximum weight data and the minimum weight data within each weight rise time interval is acquired, and a maximum difference is taken as the maximum return weight data.

In some embodiments, weight data of a first moment and weight data of a second moment detected by the gravity balance are acquired, wherein the second moment is later than and adjacent to the first moment, and an initial value of the first moment is a starting moment, weight data of which is the minimum weight data; it is determined whether the weight data of the second moment is greater than that of the first moment; if the weight data of the second moment is greater than that of the first moment, the weight data of the first moment and the weight data of the second moment are weight data within the weight rise time interval; and it is determined whether the second moment is an end moment, and if yes, the weight data of the second moment is taken as the maximum weight data, otherwise, the second moment is taken as the first moment, and the subsequent moment of the second moment is taken as the second moment.

In some embodiments, if the weight data of the second moment is less than that of the first moment, it is determined whether a weight data drop number is greater than or equal to a noise number threshold from the starting moment to the second moment, and if yes, the second moment is taken as the starting moment, otherwise, the second moment is taken as the first moment, and the subsequent moment of the second moment is taken as the second moment.

In some embodiments, if the weight data of the second moment is equal to that of the first moment, and the weight data of the previous moment of the first moment is greater than that of the first moment, it is determined whether the weight data drop number is greater than the noise number threshold from the starting moment to the second moment, and if yes, the second moment is taken as the starting moment, otherwise, the second moment is taken as the first moment, and the subsequent moment of the second moment is taken as the second moment.

According to another aspect of the present disclosure, there is further provided a commodity detection apparatus, comprising: a taken commodity data determination unit, configured to determine commodities taken by a user and weight data of each commodity of the commodities; a weight data acquisition unit, configured to acquire weight data within a weight rise time interval from the time when the user has taken the commodities to the time when a gravity balance is stabilized, wherein the gravity balance is used for detecting commodity weight; a maximum return data determination unit, configured to determine maximum return weight data according to a difference between maximum weight data and minimum weight data among the weight data within the weight rise time interval; and a commodity return estimation unit, configured to estimate whether each commodity has been returned according to the maximum return weight data and the weight data of each commodity.

In some embodiments, the commodity return estimation unit is configured to, if the weight data of a certain commodity is greater than the maximum return weight data, estimate that the commodity has been not returned, and if the weight data of a certain commodity is less than or equal to the maximum return weight data, estimate that the commodity has been returned.

In some embodiments, the commodity return estimation unit is further configured to, if the weight data of a certain commodity is less than or equal to the maximum return weight data, and a difference between the weight data detected by the gravity balance after the user has taken the commodity and the weight data detected by the gravity balance after it is stabilized is not equal to the weight data of the commodity, estimate that the commodity has been returned, and another commodity has been taken by the user.

In some embodiments, the maximum weight data is greater than weight data of a previous moment and greater than weight data of a subsequent moment, and the minimum weight data is less than weight data of the previous moment and less than weight data of the subsequent moment.

In some embodiments, the maximum return data determination unit is configured to, if there are a plurality of weight rise time intervals, acquire a difference between the maximum weight data and the minimum weight data within each weight rise time interval, and take a maximum difference as the maximum return weight data.

In some embodiments, the weight data acquisition unit is configured to acquire weight data of a first moment and weight data of a second moment detected by the gravity balance, wherein the second moment is later than and adjacent to the first moment, and an initial value of the first moment is a starting moment, weight data of which is the minimum weight data; determine whether the weight data of the second moment is larger than that of the first moment; if the weight data of the second moment is larger than that of the first moment, the weight data of the first moment and the weight data of the second moment are weight data within the weight rise time interval; and determine whether the second moment is an end moment, and if yes, take the weight data of the second moment as the maximum weight data, otherwise, take the second moment as the first moment, and take the subsequent moment of the second moment as the second moment.

In some embodiments, the weight data acquisition unit is configured to, if the weight data of the second moment is less than that of the first moment, determine whether a weight data drop number is equal to or greater than a noise number threshold from the starting moment to the second moment, and if yes, take the second moment as the starting moment, otherwise, take the second moment as the first moment, and take the subsequent moment of the second moment as the second moment.

In some embodiments, the weight data acquisition unit is configured to, if the weight data of the second moment is equal to that of the first moment, and the weight data of the previous moment of the first moment is greater than that of the first moment, determine whether the weight data drop number is greater than the noise number threshold from the starting moment to the second moment, and if yes, take the second moment as the starting moment, otherwise, take the second moment as the first moment, and take the subsequent moment of the second moment as the second moment.

According to another aspect of the present disclosure, there is further provided a commodity detection apparatus, comprising: a memory; and a processor coupled to the memory, wherein the processor is configured to perform the commodity detection method as described above based on instructions stored in the memory.

According to another aspect of the present disclosure, there is further provided a computer-readable storage medium having stored thereon computer program instructions, which when executed by a processor, implement the above-mentioned commodity detection method.

Other features of the present disclosure and advantages thereof will become apparent from the following detailed description of exemplary embodiments thereof, which proceeds with reference to the accompanying drawings.

### BRIEF DESCRIPTION OF THE DRAWINGS

The accompanying drawings, which constitute a part of this specification, illustrate embodiments of the present disclosure and, together with the description, serve to explain the principles of the present disclosure.

The present disclosure can be better understood from the following detailed description with reference to the accompanying drawings, in which:
Fig. 1 is a graph of gravity change while a user returns a certain commodity and takes another commodity according to some embodiments.
Fig. 2 is a graph of gravity change while a user returns a certain commodity and takes another commodity according to other embodiments.
Fig. 3 is a schematic flow diagram of a commodity detection method according to some embodiments of the present disclosure.
Fig. 4 is a schematic flow diagram of determining maximum return weight data in the commodity detection method according to some embodiments of the present disclosure.
Fig. 5 is a schematic flow diagram of determining maximum return weight data in the commodity detection method according to a specific embodiment of the present disclosure.
Fig. 6 is a schematic structural diagram of a commodity detection apparatus according to some embodiments of the present disclosure.
Fig. 7 is a schematic structural diagram of a commodity detection apparatus according to other embodiments of the present disclosure.
Fig. 8 is a schematic structural diagram of a commodity detection apparatus according to still other embodiments of the present disclosure.

### DETAILED DESCRIPTION

Various exemplary embodiments of the present disclosure will now be described in detail with reference to the accompanying drawings. It should be noted that: relative arrangement of components and steps, numerical expressions and numerical values set forth in these embodiments do not limit the scope of the present disclosure unless specifically stated otherwise.

Meanwhile, it should be understood that the sizes of various portions shown in the drawings are not drawn to actual scale for the convenience of description.

The following description of at least one exemplary embodiment is merely illustrative in nature and is in no way intended to limit the present disclosure, its application, or utilizations.

Techniques, methods, and apparatuses known to one of ordinary skill in the relevant art may not be discussed in detail, but are intended to be part of the specification where appropriate.

In all of the examples shown and discussed herein, any specific value should be construed to be only illustrative instead of restrictive. Thus, other examples of the exemplary embodiments can have different values.

It should be noted that: similar reference numbers and letters refer to similar items in the following drawings, and thus, once an item is defined in one drawing, it need not be further discussed in following drawings.

To make the objectives, technical solutions and advantages of the present disclosure more apparent, the present disclosure will be further described in detail below based on specific embodiments with reference to the accompanying drawings.

The applicants have found that a user will exert a pressure on a gravity balance in the process of taking/returning a commodity, and that readings of the gravity balance will change continuously in the process of taking/returning the commodity by the user since the stability of the gravity balance also takes some time. Existing unmanned vending counters using gravity information only consider a gravity value detected by the gravity balance after it is stabilized, and the weight of the commodity taken or returned by the user is determined by using a difference between a gravity value initially detected by the gravity balance and a gravity value detected by the gravity balance after it is stabilized. For example, an unmanned vending counter has already calculated that a user has currently taken commodities A and B, at this time, readings of a gravity balance changes again, and after the gravity balance is stabilized, an increased weight of the counter is equal to the weight of the commodity A, then it is considered that the user has returned the commodity A. However, the related solutions only use gravity information initially detected by the gravity balance and gravity information detected by the gravity balance after it is stabilized, without effective use of gravity information in the taking/returning process.

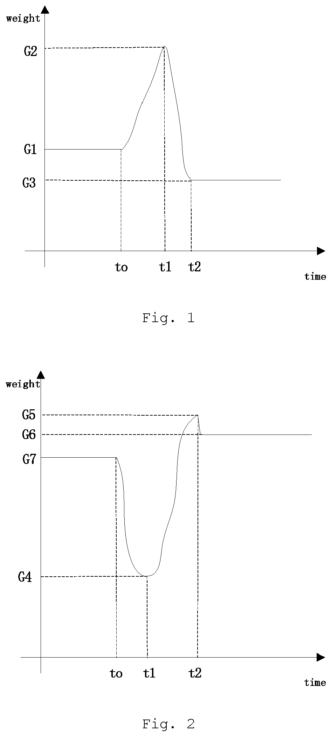

In some embodiments, after returning a commodity, a user may take a new one immediately. For example, a user has taken commodities A and B, the weight of the commodity B is much greater than that of the commodity A, and if the user has returned the commodity A, and has taken a commodity C heavier than the commodity A before the gravity balance is stabilized, a gravity change curve at this time is shown in Fig. 1, where a difference between a weight value initially detected by the gravity balance and a weight value detected by the gravity balance after it is stabilized is equal to a weight difference between the commodities C and A, so that according to the existing solution, it cannot be determined whether the user has returned the commodity A. After taking a new commodity, the user may return the one taken previously. For example, if the user has already taken the commodities A and B, the weight of the commodity B is much greater than that of the commodity A, and if the user has also taken a lighter commodity D, and has returned the commodity A before the gravity balance is stabilized, a gravity change curve at this time is shown in Fig. 2. A difference between a weight value initially detected by the gravity balance and a weight value detected by the gravity balance after it is stabilized is equal to a weight difference between the commodities A and D, so that it cannot be determined whether the commodity A has been returned by the user.

According to the present disclosure, by using the weight data within the weight rise time interval to determine a maximum weight of a commodity probably returned by a user, it can be estimated whether a taken commodity has been returned, and thus a unmanned vending counter can be assisted to calculate a purchase list of the user. The solution of the present application will be described below with specific embodiments as examples.

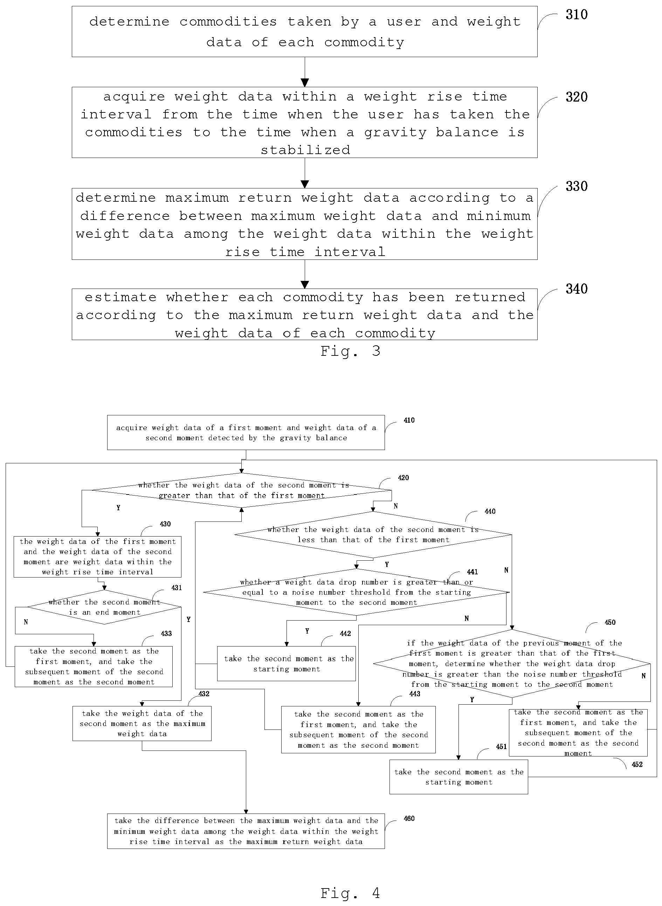

Fig. 3 is a schematic flow diagram of a commodity detection method according to some embodiments of the present disclosure.

In step 310, commodities taken by the user and weight data of each commodity are determined. For example, commodities taken from a storage device by a user and weight data of each commodity are determined, and the storage device is, for example, a device such as a counter or shelf, where commodities or goods can be stored. In some embodiments, there are commodities A, B, C, D, E in an unmanned vending counter, weight data of each commodity is known, and a user has taken the commodities A and B from the counter.

In step 320, weight data within a weight rise time interval from the time when the user has taken the commodities to the time when a gravity balance is stabilized is acquired, wherein the gravity balance is used for detecting the weight of remaining commodities in the counter. As shown in the data detected by the gravity balance of Fig. 1, after having taken the commodities A and B, the user has also taken the commodity C heavier than the commodity A before the gravity balance is stabilized. Or as shown in the data detected by the gravity balance of Fig. 2, after having taken a lighter commodity D, the user has returned the commodity A before the gravity balance is stabilized. As can be seen from Fig. 1, the weight rise time interval is an interval from t0 to t1; and as can be seen from Fig. 2, the weight rise time interval is an interval from t6 to t7, and the weight data within the weight rise time interval is weight data corresponding to the interval from t0 to t1 or the interval from t6 to t7. It will be appreciated by those skilled in the art that a corresponding relation between time and weight can be presented as a graph or specific data in a data table.

In step 330, maximum return weight data is determined according to a difference between maximum weight data and minimum weight data among the weight data within the weight rise time interval. As shown in Fig. 1, the maximum weight data is G2, the minimum weight data is G1, and the maximum return weight data is G2-G1. As shown in Fig. 2, the maximum weight data is G5, the minimum weight data is G4, and the maximum return weight data is G5-G4.

In some embodiments, the maximum weight data is greater than weight data of a previous moment and greater than weight data of a subsequent moment, and the minimum weight data is less than the weight data of the previous moment and less than the weight data of the subsequent moment.

In some embodiments, if there are a plurality of weight rise time intervals, a difference between the maximum weight data and the minimum weight data within each weight rise time interval is acquired, and a maximum difference is taken as the maximum return weight data. For example, if a user has taken and returned commodities for many times, and there may be a plurality of weight rise time intervals, a difference between the maximum weight data and the minimum weight data within each weight rise time interval should be acquired, and a maximum difference should be taken as maximum return weight data.

In step 340, it is estimated whether each commodity has been returned according to the maximum return weight data and the weight data of each commodity. For example, the commodities taken are analyzed one by one, and for the commodity A taken by the user, if the weight of the commodity A is greater than the maximum return weight, it is considered that the user has not returned the commodity A, and as shown in Fig. 1, if the weight of the commodity A is greater than the value of G2-G1, it is indicated that the user has not returned the commodity A. If the weight of the commodity A is less than or equal to the maximum return weight, it is considered that the user may have returned the commodity A. If a difference between the weight data initially detected by the gravity balance and the weight data detected by the gravity balance after it is stabilized is not equal to the weight data of the commodity A, for example, if the value of G1-G3 is not equal to the weight data of the commodity A, it is considered that the user may have taken another commodity while returning the commodity A.

In some embodiments, relying solely on weight data may not be able to accurately guess commodities purchased by the user, and therefore, after it is estimated whether each commodity has been returned, other data can be referred to comprehensively determine whether a commodity has been actually returned. For example, visual data, etc., can be referred to make comprehensive judgment.

In the above embodiment, the maximum return weight data is determined according to the difference between the maximum weight data and the minimum weight data among the weight data within the weight rise time interval, from the time when the user has taken the commodity to the time when the gravity balance is stabilized, and then the maximum return weight data is compared with the weight data of each commodity, to estimate whether each commodity has been returned, which improves the accuracy of estimating whether a commodity has been returned, and thus improves the accuracy of calculating commodities purchased by the user.

In a specific embodiment of the present disclosure, a weight data change waveform can be constructed from weight data in the process of taking commodities by a user, which is shown in Figs. 1 and 2, and then a return pulse is found according to the weight change waveform, where the return pulse is a section of waveform that monotonically increases in the weight change process, whose corresponding weight difference is the maximum return weight.

In some embodiments, since there are possible discrepancies in the detection of the gravity balance, a predetermined number of noise points that do not follow a monotonically increasing rule are allowed, e.g., one or two noise points that do not follow the monotonically increasing rule are allowed.

Fig. 4 is a schematic flow diagram of determining maximum return weight data in the commodity detection method according to some embodiments of the present disclosure.

In step 410, weight data of a first moment and weight data of a second moment detected by the gravity balance are acquired, wherein the second moment is later than and adjacent to the first moment, an initial value of the first moment is a starting moment, weight data of which is the minimum weight data. Here, a difference between the second moment and the first moment, which reflects the detection accuracy of the gravity balance, can be set according to specific actual conditions.

In step 420, it is determined whether the weight data of the second moment is greater than that of the first moment, and if yes, step 430 is performed, otherwise, step 440 is performed.

In step 430, the weight data of the first moment and the weight data of the second moment are weight data within the weight rise time interval.

In step 431, it is determined whether the second moment is an end moment, and if yes, step 432 is performed, otherwise, step 433 is performed.

In step 432, the weight data of the second moment is taken as the maximum weight data, and step 460 is subsequently performed.

In step 433, the second moment is taken as the first moment, a subsequent moment of the second moment is taken as the second moment, and step 420 is subsequently performed.

In step 440, it is determined whether the weight data of the second moment is less than that of the first moment, and if yes, step 441 is performed, otherwise, step 450 is performed.

In step 441, it is determined whether a weight data drop number is greater than or equal to a noise number threshold from the starting moment to the second moment, and if yes, step 442 is performed, otherwise, step 443 is performed.

In step 442, the second moment is taken as the starting moment, and step 420 is performed again.

In step 443, the second moment is taken as the first moment, the subsequent moment of the second moment is taken as the second moment, and step 420 is performed again.

In step 450, if the weight data of the previous moment of the first moment is greater than that of the first moment, it is determined whether the weight data drop number is greater than the noise number threshold from the starting moment to the second moment, and if yes, step 451 is performed, otherwise, step 452 is performed. Here, the noise number threshold is, for example, 1 or 2.

In step 451, the second moment is taken as the starting moment, and step 420 is performed again.

In step 452, the second moment is taken as the first moment, the subsequent moment of the second moment is taken as the second moment, and step 420 is performed again.

In step 460, the difference between the maximum weight data and the minimum weight data among the weight data within the weight rise time interval is taken as the maximum return weight data.

In this embodiment, by comparing the weight data of the adjacent moments and judging whether the weight data drop number from the starting moment to the second moment is greater than the noise number threshold, the weight data within the weight rise time interval can be determined, and then the maximum return weight data can be determined, which is convenient to subsequently estimate whether each commodity has been returned into the counter by comparing the maximum return weight data with the weight data of each commodity.

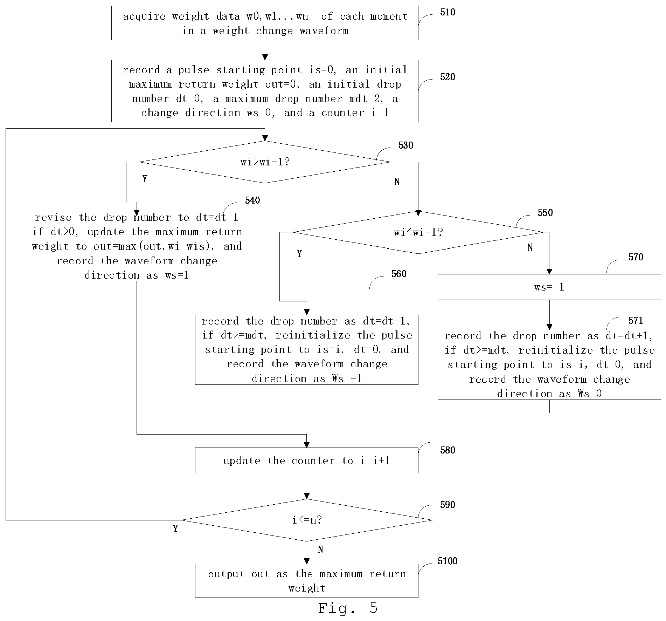

Fig. 5 is a schematic flow diagram of determining maximum return weight data in the commodity detection method according to a specific embodiment of the present disclosure.

In step 510, weight data *w*₀,*w*₁,...,*wₙ* of each moment in a weight change waveform are acquired.

In step 520, a pulse starting point is recorded as *is*=0, an initial maximum return weight is recorded as *out*=0, an initial drop number is recorded as *dt*=0, a maximum drop number is recorded as *mdt=2,* a change direction is recorded as *ws*=0, and a counter is recorded as *i*=1. Here, the pulse starting point is a starting point of a weight rise time interval, the change direction *ws*=0 denotes that the waveform direction is not changed, *ws*=1 denotes that the waveform direction is positive, and *ws*=-1 denotes that the waveform direction is negative.

In step 530, it is determined whether *wᵢ* is greater than *w*_{*i*-1}, and if yes, the waveform is in a rising band, and step 540 is performed, otherwise, step 550 is performed.

In step 540, the drop number is revised to *dt*=*dt*-1 if *dt*>0, the maximum return weight is updated to *out*=max(*out*, *wᵢ*-*wᵢₛ*), and the waveform change direction is recorded as *ws*=1. Step 580 is subsequently performed.

In step 550, it is determined whether *wᵢ* is less than *w*_{*i*-1}, and if yes, it is indicated that the waveform is in a falling band, and step 560 is performed, otherwise, step 570 is performed.

In step 560, the drop number is recorded as *dt*=*dt*+1, if *dt*>=*mdt*, the pulse starting point is reinitialized to *is*=*i*, *dt*=0, and the waveform change direction is recorded as *ws*=-1. Step 580 is subsequently performed.

In step 570, *ws*=-1, it is considered that the waveform is still in the falling band at this time, and step 571 is performed.

At the time of *wᵢ*-*w*_{*i*-1}, processing must be performed according to the change direction *ws*.

In step 571, the drop number is recorded as *dt*=*dt*+1, if *dt*>=*mdt,* the pulse start is reinitialized to *is*=*i*, *dt*=0, and the waveform change direction is recorded as *ws*=-1. Step 580 is subsequently performed.

In step 580, the counter is updated to *i*=*i*+1.

In step 590, it is determined whether *i* is less than or equal to γᵢ, and if yes, step 530 is performed, otherwise, step 5100 is performed.

In step 5100, *out* is output as the maximum return weight.

In the above embodiment, a section of continuous waveform that monotonically increases is found based on the weight data of each moment in the weight change waveform, wherein noise points that partially do not follow the monotonically increasing rule are allowed in this waveform, and then the maximum weight return value is output, which is convenient to subsequently estimate whether the commodity has been returned into the counter based on the maximum return weight value.

In a specific embodiment, assuming that the commodity A weighs 50g, the commodity B weighs 100g, and the commodity C weighs 150g, if the weight value detected by the gravity balance is increased by 50g, there are 4 possibilities: 1. the user has returned the commodity A; 2. the user has returned the commodity B and has taken the commodity A; 3. the user has returned the commodity C and has taken the commodity B; 4. the user has returned the commodity C and has taken two commodities A. If the maximum return weight data calculated according to the present disclosure is less than 100g, the 2nd, 3rd, and 4th possibilities can be excluded. If the calculated maximum return weight data is less than 150g, the 3rd and 4th possibilities can be excluded.

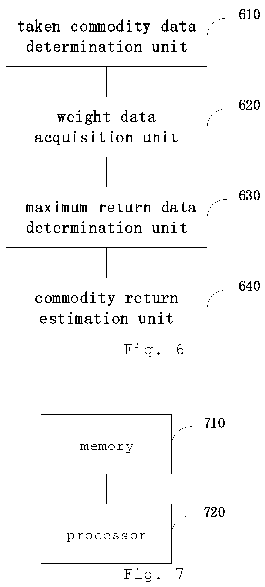

Fig. 6 is a schematic structural diagram of a commodity detection apparatus according to some embodiments of the present disclosure. The commodity detection apparatus comprises a taken commodity data determination unit 610, a weight data acquisition unit 620, a maximum return data determination unit 630, and a commodity return estimation unit 640.

The taken commodity data determination unit 610 is configured to determine commodities taken by a user and weight data of each commodity. For example, commodities taken from a storage device by the user and weight data of each commodity are determined, and the storage device is, for example, a device such as a counter or shelf, where commodities or goods can be stored. In some embodiments, there are commodities A, B, C, D, E in an unmanned vending counter, weight data of each commodity is known, and a user has taken the commodities A and B from the counter.

The weight data acquisition unit 620 is configured to acquire weight data within the weight rise time interval from the time when the user has taken the commodities to the time when a gravity balance is stabilized, wherein the gravity balance is used for detecting weight of commodities in a counter. As shown in the data detected by the gravity balance of Fig. 1, the user has taken the commodities A and B, and then has taken the commodity C heavier than the commodity A before the gravity balance is stabilized, or as shown in the data detected by the gravity balance of Fig. 2, the user has taken the lighter commodity D, and has returned the commodity A before the gravity balance is stabilized. As can be seen from Fig. 1, the weight rise time interval is an interval from t0 to t1, and as can be seen from Fig. 2, the weight rise time interval is an interval from t6 to t7, and the weight data within the weight rise time interval is weight data corresponding to the interval from t0 to t1 or the interval from t6 to t7. It will be appreciated by those skilled in the art that a corresponding relation between time and weight can be as a graph or specific data in a data table.

In some embodiments, weight data of a first moment and weight data of a second moment detected by the gravity balance are acquired, wherein the second moment is later than and adjacent to the first moment, and an initial value of the first moment is a starting moment, weight data of which is the minimum weight data; it is determined whether the weight data of the second moment is larger than that of the first moment; if the weight data of the second moment is larger than that of the first moment, the weight data of the first moment and the weight data of the second moment are weight data within the weight rise time interval; and it is determined whether the second moment is an end moment, and if yes, the weight data of the second moment is taken as the maximum weight data, otherwise, the second moment is taken as the first moment, and the subsequent moment of the second moment is taken as the second moment.

If the weight data of the second moment is less than that of the first moment, it is determined whether a weight data drop number from the starting moment to the second moment is greater than or equal to a noise number threshold, and if yes, the second moment is taken as the starting moment, otherwise, the second moment is taken as the first moment, and the subsequent moment of the second moment is taken as the second moment.

If the weight data of the second moment is equal to that of the first moment and the weight data of the previous moment of the first moment is greater than that of the first moment, it is determined whether the weight data drop number from the starting moment to the second moment is greater than the noise number threshold, and if yes, the second moment is taken as the starting moment, otherwise, the second moment is taken as the first moment, and the subsequent moment of the second moment is taken as the second moment.

The maximum return data determination unit 630 is configured to determine the maximum return weight data according to a difference between the maximum weight data and the minimum weight data among the weight data within the weight rise time interval. As shown in Fig. 1, the maximum weight data is G2, the minimum weight data is G1, and the maximum return weight data is G2-G1. As shown in Fig. 2, the maximum weight data is G5, the minimum weight data is G4, and the maximum return weight data is G5-G4.

In some embodiments, the maximum weight data is greater than weight data of a previous moment and greater than weight data of a subsequent moment, and the minimum weight data is less than the weight data of the previous moment and less than the weight data of the subsequent moment.

In some embodiments, if there are a plurality of weight rise time intervals, a difference between the maximum weight data and the minimum weight data within each weight rise time interval is acquired, and a maximum difference is taken as the maximum return weight data.

The commodity return estimation unit 640 is configured to estimate whether each commodity has been returned according to the maximum return weight data and the weight data of each commodity.

For example, the commodities taken are analyzed one by one, and for the commodity A taken by the user, if the weight of the commodity A is greater than the maximum return weight, it is considered that the commodity A has not been returned by the user, and as shown in Fig. 1, if the weight of the commodity A is greater than the value of G2-G1, it is indicated that the commodity A has not been returned by the user, otherwise, it is considered that the commodity A may have been returned by the user. At this time, a difference between the weight data detected by the gravity balance after the user has taken the commodity and the weight data detected by the gravity balance after it is stabilized is not equal to the weight data of the commodity A, for example, if the value of G1-G3 is not equal to the weight data of the commodity A, it is considered that the user may have taken another commodity while returning the commodity A.

In some embodiments, relying solely on weight data may not be able to accurately guess commodities purchased by a user, and therefore, after it is estimated whether each commodity has been returned, other data can be referred to comprehensively determine whether a commodity has been actually returned. For example, visual data, etc., can be referred to make comprehensive judgment.

In this embodiment, according to the difference between the maximum weight data and the minimum weight data among the weight data within the weight rise time interval from the time when the user has taken the commodities to the time when the gravity balance is stabilized, the maximum return weight data is determined, then the maximum return weight data is compared with the weight data of each commodity, to estimate whether each commodity has been returned, which improves the accuracy of detecting whether a commodity has been returned, and thus can assist in calculating commodities purchased by a user.

Fig. 7 is a schematic structural diagram of a commodity detection apparatus according to other embodiments of the present disclosure. This apparatus comprises a memory 710 and a processor 720, wherein: the memory 710 can be a magnetic disk, flash memory, or any other non-volatile storage medium. The memory is configured to store instructions in the embodiments corresponding to Figs. 3 to 5. The processor 720, coupled to the memory 710, can be implemented as one or more integrated circuits, such as a microprocessor or microcontroller. The processor 720 is configured to execute instructions stored in the memory.

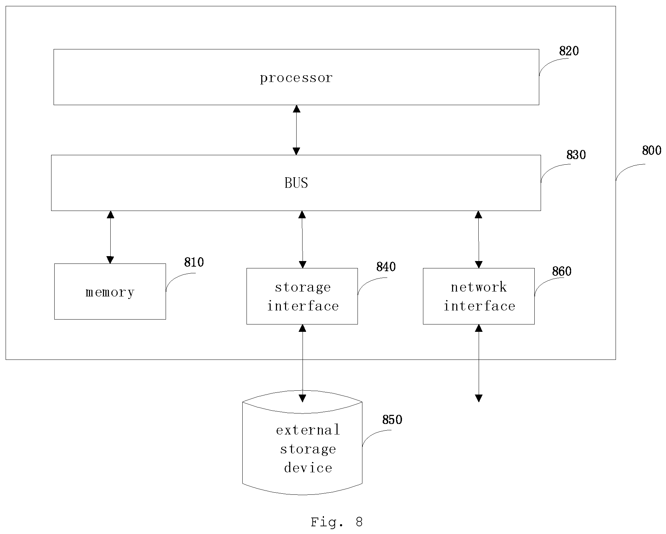

In some embodiments, as also shown in Fig. 8, the apparatus 800 comprises a memory 810 and a processor 820. The processor 820 is coupled to the memory 810 through a BUS 830. The apparatus 800 can also be coupled to an external storage device 850 through a storage interface 840 so as to call external data, and can also be coupled to a network or another computer system (not shown) through a network interface 860, which will not be described in detail herein.

In this embodiment, by storing the data instructions in the memory, and then processing the above instructions by the processor, the accuracy of detecting whether a commodity has been returned can be improved.

In other embodiments, a computer-readable storage medium has stored thereon computer program instructions which, when executed by a processor, implement the steps of the method in the embodiments corresponding to Figs. 3 to 5. As will be appreciated by those skilled in the art, the embodiments of the present disclosure may be provided as a method, apparatus, or computer program product. Accordingly, the present disclosure may take the form of an entirely hardware embodiment, an entirely software embodiment or an embodiment combining software and hardware aspects. Furthermore, the present disclosure may take the form of a computer program product implemented on one or more computer-usable non-transitory storage media (including, but not limited to, disk storage, CD-ROM, optical storage, and so forth) having computer-usable program codes embodied therein.

The present disclosure is described with reference to flow diagrams and/or block diagrams of the method, apparatus (system) and computer program product according to the embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions can be provided to a processor of a general purpose computer, special purpose computer, embedded processor, or other programmable data processing apparatus to produce a machine, such that the instructions executed by the processor of the computer or other programmable data processing apparatus, create means for implementing the functions specified in one or more flows of the flow diagrams and/or one or more blocks of the block diagrams.

These computer program instructions can also be stored in a computer-readable memory that can guide a computer or other programmable data processing apparatus to work in a particular way, such that the instructions stored in the computer-readable memory produce an article of manufacture containing instruction means which implement the function specified in one or more flows of the flow diagrams and/or one or more blocks of the block diagrams.

These computer program instructions can also be loaded onto a computer or other programmable data processing apparatus, so as to perform a series of operational steps on the computer or other programmable apparatus to generate a computer-implemented process, such that the instructions executed on the computer or other programmable apparatus, provide steps for implementing the functions specified in one or more flows of the flow diagrams and/or one or more blocks of the block diagrams.

Thus far, the present disclosure has been described in detail. Some details well known in the art have not been described in order to avoid obscuring the concepts of the present disclosure. Those skilled in the art can now fully appreciate how to implement the technical solutions disclosed herein, in view of the foregoing description.

Although some specific embodiments of the present disclosure have been described in detail by way of examples, it should be understood by those skilled in the art that the above examples are intended to be illustrative only and not to limit the scope of the present disclosure. It will be appreciated by those skilled in the art that, modifications can be made to the above embodiments without departing from the scope and spirit of the present disclosure. The scope of the present disclosure is defined by the appended claims.

## Claims

1. A commodity detection method, comprising:
determining commodities taken by a user and weight data of each commodity of the commodities;
acquiring weight data within a weight rise time interval from the time when the user has taken the commodities to the time when a gravity balance is stabilized, wherein the gravity balance is used for detecting commodity weight;
determining maximum return weight data according to a difference between maximum weight data and minimum weight data among the weight data within the weight rise time interval; and
estimating whether each commodity has been returned according to the maximum return weight data and the weight data of each commodity.

2. The commodity detection method according to claim 1, wherein:
if the weight data of a certain commodity is greater than the maximum return weight data, it is estimated that the commodity has been not returned; and
if the weight data of a certain commodity is less than or equal to the maximum return weight data, it is estimated that the commodity has been returned.

3. The commodity detection method according to claim 2, wherein
if the weight data of a certain commodity is less than or equal to the maximum return weight data, and a difference between the weight data detected by the gravity balance after the user has taken the commodities and the weight data detected by the gravity balance after the gravity balance is stabilized is not equal to the weight data of the commodity, it is estimated that the commodity has been returned, and another commodity has been taken by the user.

4. The commodity detection method according to claim 1, wherein:
the maximum weight data is greater than weight data of a previous moment and greater than weight data of a subsequent moment; and
the minimum weight data is less than the weight data of the previous moment and less than the weight data of the subsequent moment.

5. The commodity detection method according to claim 1, wherein if there are a plurality of weight rise time intervals, a difference between the maximum weight data and the minimum weight data within each weight rise time interval is acquired, and a maximum difference is taken as the maximum return weight data.

6. The commodity detection method according to any of claims 1 to 5, wherein:
weight data of a first moment and weight data of a second moment detected by the gravity balance are acquired, wherein the second moment is later than and adjacent to the first moment, and an initial value of the first moment is a starting moment, weight data of which is the minimum weight data;
it is determined whether the weight data of the second moment is greater than that of the first moment;
if the weight data of the second moment is greater than that of the first moment, the weight data of the first moment and the weight data of the second moment are weight data within the weight rise time interval; and
it is determined whether the second moment is an end moment, and if yes, the weight data of the second moment is taken as the maximum weight data, otherwise, the second moment is taken as the first moment, and the subsequent moment of the second moment is taken as the second moment.

7. The commodity detection method according to claim 6, wherein if the weight data of the second moment is less than that of the first moment, it is determined whether a weight data drop number is greater than or equal to a noise number threshold from the starting moment to the second moment, and if yes, the second moment is taken as the starting moment, otherwise, the second moment is taken as the first moment, and the subsequent moment of the second moment is taken as the second moment.

8. The commodity detection method according to claim 7, wherein if the weight data of the second moment is equal to that of the first moment, and the weight data of the previous moment of the first moment is greater than that of the first moment, it is determined whether the weight data drop number is greater than the noise number threshold from the starting moment to the second moment, and if yes, the second moment is taken as the starting moment, otherwise, the second moment is taken as the first moment, and the subsequent moment of the second moment is taken as the second moment.

9. A commodity detection apparatus, comprising:
a taken commodity data determination unit, configured to determine commodities taken by a user and weight data of each commodity of the commodities;
a weight data acquisition unit, configured to acquire weight data within a weight rise time interval from the time when the user has taken the commodities to the time when a gravity balance is stabilized, wherein the gravity balance is used for detecting commodity weight;
a maximum return data determination unit, configured to determine maximum return weight data according to a difference between maximum weight data and minimum weight data among the weight data within the weight rise time interval; and
a commodity return estimation unit, configured to estimate whether each commodity has been returned according to the maximum return weight data and the weight data of each commodity.

10. The commodity detection apparatus according to claim 9, wherein
the commodity return estimation unit is configured to, if the weight data of a certain commodity is greater than the maximum return weight data, estimate that the commodity has been not returned, and if the weight data of a certain commodity is less than or equal to the maximum return weight data, estimate that the commodity has been returned.

11. The commodity detection apparatus according to claim 10, wherein
the commodity return estimation unit is further configured to, if the weight data of a certain commodity is less than or equal to the maximum return weight data, and a difference between the weight data detected by the gravity balance after the user has taken the commodities and the weight data detected by the gravity balance after it is stabilized is not equal to the weight data of the commodity, estimate that the commodity has been returned, and another commodity has also been taken by the user.

12. The commodity detection apparatus according to claim 9, wherein
the maximum weight data is greater than weight data of a previous moment and greater than weight data of a subsequent moment, and the minimum weight data is less than the weight data of the previous moment and less than the weight data of the subsequent moment.

13. The commodity detection apparatus according to claim 9, wherein
the maximum return data determination unit is configured to, if there are a plurality of weight rise time intervals, acquire a difference between the maximum weight data and the minimum weight data within each weight rise time interval, and take a maximum difference as the maximum return weight data.

14. The commodity detection apparatus according to any of claims 9 to 13, wherein
the weight data acquisition unit is configured to acquire weight data of a first moment and weight data of a second moment detected by the gravity balance, wherein the second moment is later than and adjacent to the first moment, and an initial value of the first moment is a starting moment, weight data of which is the minimum weight data; determine whether the weight data of the second moment is larger than that of the first moment; if the weight data of the second moment is larger than that of the first moment, the weight data of the first moment and the weight data of the second moment are weight data within the weight rise time interval; and determine whether the second moment is an end moment, and if yes, take the weight data of the second moment as the maximum weight data, otherwise, take the second moment as the first moment, and take the subsequent moment of the second moment as the second moment.

15. The commodity detection apparatus according to claim 14, wherein
the weight data acquisition unit is configured to, if the weight data of the second moment is less than that of the first moment, determine whether a weight data drop number is greater than or equal to a noise number threshold from the starting moment to the second moment, and if yes, take the second moment as the starting moment, otherwise, take the second moment as the first moment, and take the subsequent moment of the second moment as the second moment.

16. The commodity detection apparatus according to claim 15, wherein
the weight data acquisition unit is configured to, if the weight data of the second moment is equal to that of the first moment, and the weight data of the previous moment of the first moment is greater than that of the first moment, determine whether the weight data drop number is greater than the noise number threshold from the starting moment to the second moment, and if yes, take the second moment as the starting moment, otherwise, take the second moment as the first moment, and take the subsequent moment of the second moment as the second moment.

17. A commodity detection apparatus, comprising:
a memory; and
a processor coupled to the memory, wherein the processor is configured to perform the commodity detection method according to any of claims 1 to 8 based on instructions stored in the memory.

18. A computer-readable storage medium having stored thereon computer program instructions, which when executed by a processor, implement the commodity detection method according to any of claims 1 to 8.
